# EUROPÄISCHE PATENTSCHRIFT

(11) **EP 4 281 244 B1**
(45) Veröffentlichungstag und Bekanntmachung des Hinweises auf die Patenterteilung: **08.04.2026**
(21) Anmeldenummer: 22702202.7
(22) Anmeldetag: 20.01.2022
(51) Int. Cl.: B23K 26/06, B23K 26/067, B23K 26/082, B23K 26/20, B23K 26/352, B23K 26/36, B23K 26/0622, G02B 26/10, G02B 27/09, G02B 27/10, G02F 1/33

(54) **ANORDNUNG ZUR LASERMATERIALBEARBEITUNG**
ARRANGEMENT FOR LASER MATERIAL PROCESSING
DISPOSITIF POUR LE TRAITEMENT DE MATÉRIAUX AU LASER

(30) Priorität: 22.01.2021 DE 102021101373
(43) Veröffentlichungstag der Anmeldung: 29.11.2023
(73) Patentinhaber: Fraunhofer-Gesellschaft zur Förderung der angewandten Forschung e.V., 80686 München (DE); Rheinisch-Westfälische Technische Hochschule Aachen, 52056 Aachen (DE)
(72) Erfinder: HESKER, Mario, 52072 Aachen (DE)
(86) Internationale Anmeldenummer: PCT/EP2022/051237
(87) Internationale Veröffentlichungsnummer: WO 2022/157246

(56) Entgegenhaltungen:
- US-A- 4 541 712
- US-A1- 2006 213 885
- HOMBURG OLIVER ET AL: "Ultra-short pulse laser micro patterning with highest throughput by utilization of a novel multi-beam processing head", PROCEEDINGS OF SPIE; [PROCEEDINGS OF SPIE ISSN 0277-786X VOLUME 10524], SPIE, US, vol. 10092, 17 February 2017 (2017-02-17), pages 100921C - 100921C, XP060085288, ISBN: 978-1-5106-1533-5, DOI: 10.1117/12.2255707

## Beschreibung

### Technisches Anwendungsgebiet

Die vorliegende Erfindung betrifft eine Anordnung zur Lasermaterialbearbeitung gemäß dem Oberbegriff von Anspruch 1 (siehe beispielsweise US 2006/213885 A1).

Laser werden in vielen technischen Bereichen für die Materialbearbeitung eingesetzt, beispielsweise zur Oberflächenstrukturierung, zum Fügen oder Schneiden oder auch auf dem Gebiet der generativen Fertigung. Die für die Lasermaterialbearbeitung verfügbaren Laserstrahlquellen, insbesondere Laserstrahlquellen für ultrakurzgepulste Laserstrahlung, werden mit immer höheren Leistungen bereitgestellt. Materialbedingt ist die maximale Leistung für einen Laserspot auf dem Werkstück allerdings begrenzt. Zur effizienten Nutzung der hohen Laserleistungen wird die Gesamtleistung daher häufig auf mehrere Teilstrahlen aufgeteilt. Durch eine zweidimensionale Anordnung der Laserspots in Form einer Matrix aus mehreren Zeilen und Spalten kann zudem eine schnelle Materialbearbeitung erfolgen. Dies erfordert zur Erhaltung der Flexibilität des Bearbeitungsprozesses die Möglichkeit des separaten Ein- und Ausschaltens jedes einzelnen Teilstrahls. Hierzu werden häufig akusto-optische Modulatoren (AOM) eingesetzt. Die Schaltgeschwindigkeit und die Beugungseffizienz der Strahlablenkung sind bei akusto-optischen Modulatoren stark vom Strahldurchmesser, dem Auftreffwinkel des Strahls auf den Kristall des akusto-optischen Modulators sowie der Strahldivergenz abhängig. Daher ist der Strahldurchmesser möglichst klein zu halten. Die untere Grenze des Strahldurchmessers ist durch die Zerstörschwelle des akusto-optischen Modulators bestimmt.

### Stand der Technik

Aus S. Bruening et al., "Ultra-fast multi-spotparallel processing of functional micro- and nano scale structures on embossing dies with ultrafast lasers", Lasers in Manufacturing Conference 2017 ist beispielsweise eine Laseranordnung zur Lasermaterialbearbeitung bekannt, bei der ein kollimierter Laserstrahl aus einer Laserstrahlquelle mit einer Strahlaufteilungseinrichtung in mehrere Teilstrahlen aufgeteilt wird, die über eine Fourier-Linse dann parallel zueinander ausgerichtet und durch einen mehrkanaligen akusto-optischen Modulator geführt werden. Die Strahlaufteilung erfolgt dabei nur in einer Ebene, so dass eine eindimensionale Spot-Matrix in der Bearbeitungsebene erzeugt wird. Der akusto-optische Modulator befindet sich dabei in dem Zwischenfokus der mit der Fourier-Linse aufgebauten Relais-Optik. Mit einer derartigen Anordnung lassen sich durch entsprechend ausgebildete Strahlaufteilungseinrichtungen und mehrere mehrkanalige akusto-optische Modulatoren, zweidimensionale Spot-Matrizen in der Bearbeitungsebene erzeugen. Mehrkanalige akusto-optische Modulatoren können mehrere in einer Ebene propagierende Teilstrahlen unabhängig voneinander ablenken. Bei zweidimensionalen Strahlmatrizen sind daher mehrere mehrkanalige Modulatoren notwendig. Bauartbedingt wird die Optik vor den Modulatoren dadurch allerdings sehr breit, wodurch große, in der Regel sehr kostenintensive Linsen zur Strahlformung notwendig sind. Außerdem weisen die Teilstrahlen bei der obigen Lösung im akusto-optischen Modulator aufgrund des Zwischenfokus eine Divergenz auf, bei der der Strahldurchmesser in der Mitte des Modulators kleiner als an der Ein- und Austrittsebene des Kristalls ist. Dies verringert die Beugungseffizienz und vergrößert die Schaltzeit des akusto-optischen Modulators.

Die Aufgabe der vorliegenden Erfindung besteht darin, eine Anordnung zur Lasermaterialbearbeitung mit einer zweidimensionalen Strahlmatrix anzugeben, die eine effiziente Modulation der einzelnen Strahlen ermöglicht und sich kompakter realisieren lässt.

### Darstellung der Erfindung

Die Aufgabe wird mit der Anordnung zur Lasermaterialbearbeitung gemäß Patentanspruch 1 gelöst. Vorteilhafte Ausgestaltungen der Anordnung sind Gegenstand der abhängigen Patentansprüche oder lassen sich der nachfolgenden Beschreibung sowie den Ausführungsbeispielen entnehmen.

Die vorgeschlagene Anordnung zur Lasermaterialbearbeitung weist wenigstens eine Laserstrahlquelle, die einen kollimierten Laserstrahl emittiert, eine Strahlaufteilungseinrichtung, eine erste optische Anordnung, eine Modulationseinrichtung und eine dynamische Strahlablenkeinrichtung auf. Die Laserstrahlquelle kann beispielsweise durch einen Laser mit davor angeordneter Kollimationsoptik gebildet sein. Auch ein Laser, der bereits einen kollimierten Laserstrahl emittiert, kann selbstverständlich zum Einsatz kommen. Die Strahlaufteilungseinrichtung ist so ausgebildet, dass sie den kollimierten Laserstrahl zweidimensional, also in zwei senkrecht zueinanderstehenden Richtungen (im Folgenden auch als x- und y-Richtung bezeichnet), in mehrere Teilstrahlen aufteilt, die in wenigstens einer ersten Dimension nicht parallel zueinander verlaufen. Vorzugsweise werden hierbei in der ersten Dimension wenigstens 4 nicht parallel verlaufende Teilstrahlen, also wenigstens eine 4xN Strahlmatrix (mit N ≥ 2), erzeugt. Die erste optische Anordnung ist so ausgebildet und angeordnet, dass sie die Teilstrahlen in der ersten Dimension parallel zueinander ausrichtet, ohne die Kollimation der einzelnen Teilstrahlen zu beeinflussen. Die sich an die erste optische Anordnung anschließende Modulationseinrichtung weist mehrere akusto-optische Modulatoren auf, die in der ersten Dimension mehrkanalig ausgebildet sind und mit denen die einzelnen Teilstrahlen unabhängig voneinander moduliert werden können. Mit der dynamischen Strahlablenkeinrichtung, bspw. einem 2D-Galvanometerscanner, werden die Teilstrahlen dann in zwei senkrecht zueinanderstehenden Richtungen dynamisch abgelenkt und über eine Bearbeitungsebene geführt. Zwischen der dynamischen Strahlablenkeinrichtung und der Bearbeitungsebene ist in der Regel eine Fokussieroptik zur Fokussierung der Teilstrahlen auf die Bearbeitungsebene angeordnet, beispielsweise eine F-Theta-Linse. Durch die Modulation der Teilstrahlen in den akusto-optischen Modulatoren können die einzelnen Laserspots in der Bearbeitungsebene unabhängig voneinander ein- und ausgeschaltet werden. Die vorgeschlagene Anordnung zeichnet sich dadurch aus, dass die erste optische Anordnung mehrere erste Prismen aufweist, die so ausgebildet und angeordnet sind, dass sie die Teilstrahlen beim Durchgang durch die Prismen durch jeweils zweifache Brechung (an Ein- und Austrittsfläche des Prismas) in der ersten Dimension parallel zueinander ausrichten. Diese Ausrichtung der Teilstrahlen erfolgt also nicht durch Reflexion an einer Prismenfläche, sondern alleine durch die zweifache Brechung. Jedem Teilstrahl, dessen Ausbreitungsrichtung für die parallele Ausrichtung angepasst werden muss, ist dabei eines der Prismen zugeordnet. Vorzugsweise wird jeweils ein gemeinsames Prisma für alle Teilstrahlen einer Strahlebene verwendet, die jeweils senkrecht zur ersten Dimension verläuft. So lenkt bspw. im Falle einer 8x8 Strahlmatrix jedes Prisma alle 8 Teilstrahlen einer derartigen Strahlebene gleichzeitig um. Es werden in diesem Fall also insgesamt 8 Prismen für 64 Teilstrahlen benötigt.

Durch die Verwendung von Prismen zur Strahlparallelisierung in der ersten Dimension, die im Folgenden der x-Richtung entspricht, wird die Kollimation der einzelnen Teilstrahlen erhalten, so dass diese Teilstrahlen in den akusto-optischen Modulatoren keine Divergenz mehr aufweisen. Auf diese Weise kann die maximale Schalteffizienz in den akusto-optischen Modulatoren erzielt und die maximal mögliche Leistung pro Teilstrahl in die Bearbeitungsebene transportiert werden. Durch die Nutzung der Prismen zur Strahlparallelisierung wird zudem eine kompaktere Anordnung ermöglicht als bei der Verwendung von Relais-Optiken. Die Prismen sind dabei vorzugsweise so ausgebildet, dass sie ohne zusätzliche Komponenten miteinander, zu einem Prismenstapel, verklebt oder gefügt werden können. Insbesondere weisen die Prismen eine trapezförmige Grundfläche mit paralleler Ober- und Unterseite auf, die wiederum parallel zur optischen Ache sind.

In einer vorteilhaften Ausgestaltung werden die Prismen unter Bildung eines Prismenstapels starr miteinander verbunden, beispielsweise verklebt oder gefügt. Dadurch wird die Justage der Anordnung aufgrund einer Reduzierung der Prismen-Freiheitsgrade erheblich erleichtert. Vorzugsweise weist die erste optische Anordnung zusätzlich ein afokales Teleskop auf, durch das der Strahldurchmesser der Teilstrahlen auf das in den akusto-optischen Modulatoren benötigte (und noch zulässige) Maß eingestellt, insbesondere verringert wird. Das afokale Teleskop wird auch dazu genutzt, die nach der Strahlaufteilungseinrichtung auseinander divergierenden (aber alle weiterhin kollimierten) Teilstrahlen stärker auseinander zu separieren (der Divergenzwinkel hängt direkt mit dem Verkleinerungsfaktor des Teleskops zusammen). Die Strahlaufteilungseinrichtung kann bspw. durch wenigstens ein diffraktives optisches Element (DOE) gebildet sein, wie dies aus dem Stand der Technik bekannt ist.

Durch die Parallelisierung der Teilstrahlen in der ersten Dimension (x-Richtung) treffen diese parallel zueinander auf den jeweiligen (in dieser Dimension) mehrkanaligen akusto-optischen Modulator, dessen Kristall-Eintrittsfläche (durch Drehung um die x-Achse) unter dem Bragg-Winkel zu den eintreffenden Teilstrahlen angeordnet ist. In der dazu senkrechten zweiten Dimension, die im Folgenden der y-Richtung entspricht, sind die Teilstrahlen nicht parallelisiert. Für jede Strahlebene mit in der ersten Dimension parallelisierten Teilstrahlen wird ein mehrkanaliger akusto-optischer Modulator eingesetzt. Durch Nutzung mehrerer Strahlumlenkelemente, insbesondere Spiegel, zwischen der Strahlaufteilungseinrichtung und der dynamischen Strahlablenkungseinrichtung kann ein gefalteter Strahlengang erzeugt werden, der eine noch kompaktere Ausführung der Anordnung ermöglicht. Die Strahlumlenkung erfolgt dabei vorzugsweise in zur x-Richtung senkrechten Ebenen.

Die dynamische Strahlablenkeinrichtung weist vorzugsweise zwei um zueinander senkrechte Achsen schwenkbare Spiegel auf, beispielsweise in Form eines zweidimensionalen Galvanometer-Scanners.

In einer vorteilhaften Ausgestaltung ist zwischen der Modulationseinrichtung und der dynamischen Strahlablenkeinrichtung eine zweite optische Anordnung angeordnet, durch welche die aus der Modulationseinrichtung austretenden Teilstrahlen so abgelenkt werden, dass sich ein gegenseitiger Abstand der Teilstrahlen in der Bearbeitungsebene gegenüber einer Ausgestaltung ohne diese zweite optische Anordnung verkleinert oder vergrößert. Auf diese Weise kann der gewünschte Spot-Abstand in der Bearbeitungsebene eingestellt werden. Weiterhin kann durch diese zweite optische Anordnung auch eine Vorfokussierung oder eine Änderung des Strahldurchmessers der kollimierten Teilstrahlen erfolgen. Vorzugsweise wird in der zweiten optischen Einrichtung hierzu ein Teleskop mit einer Eingangs- und einer Ausgangsoptik eingesetzt, zwischen denen wiederum mehrere Prismen angeordnet sind, durch die der gegenseitige Abstand der Teilstrahlen in der Bearbeitungsebene entsprechend verkleinert oder vergrößert wird. Auch diese Prismen sind vorzugsweise unter Bildung eines Prismenstapels starr miteinander verbunden. Insbesondere weisen die Prismen hierzu eine trapezförmige Grundfläche mit paralleler Ober- und Unterseite auf, die wiederum parallel zur optischen Ache sind. Die Ablenkung der einzelnen Teilstrahlen erfolgt wiederum, wie bei der ersten optischen Anordnung, durch zweifache Brechung beim Durchgang durch das jeweilige Prisma. Damit ist es möglich, den Spot-Abstand und die Spot-Größe in der Bearbeitungsebene bzw. auf dem Werkstück unabhängig vom Kanalabstand des jeweiligen mehrkanaligen akusto-optischen Modulators zu wählen. Die Spot-Größe wird über die Dimensionierung des Teleskops, der Spot-Abstand über die Dimensionierung der Prismen eingestellt.

Die vorgeschlagene Anordnung zur Lasermaterialbearbeitung ermöglicht die effiziente Nutzung großer Laserleistungen (> 1kW), bspw. im Ultrakurzpuls-Bereich, bei gleichzeitiger Reduktion der Größe notwendiger optischer Elemente sowie des benötigten Bauraums. Durch die Skalierbarkeit und Flexibilität der Anordnung liegt die industrielle Verwendungsmöglichkeit vor allem in der Oberflächenstrukturierung. Hierzu zählt die Erzeugung von Funktionsflächen zur Reibungsreduzierung von beispielsweise Flugzeugtragflächen oder das Herstellen von Druckwalzen. Da durch die Skalierbarkeit der Anordnung mehr Laserleistung durch eine größere Spot-Matrix (größere Anzahl an Laserspots) auf das Werkstück gebracht werden kann, vergrößert sich die Produktivität von Anwendungen zur Lasermaterialbearbeitung deutlich.

### Kurze Beschreibung der Zeichnungen

Die vorgeschlagene Anordnung wird nachfolgend anhand von Ausführungsbeispielen in Verbindung mit den Zeichnungen nochmals näher erläutert. Hierbei zeigen:
- Fig. 1: eine schematische Darstellung einer Spot-Matrix in einer Bearbeitungsebene (a) sowie beispielhaft bei der Bearbeitung eines Werkstücks (b);
- Fig. 2: eine schematische Darstellung des Durchgangs eines divergenten Strahlbündels durch einen AOM (a) sowie eine Darstellung der Strahltaille eines Strahlenbündels innerhalb eines AOM (b);
- Fig. 3: eine Seitenansicht (a) einer Anordnung zur Lasermaterialbearbeitung gemäß dem Stand der Technik und eine Draufsicht (b) auf diese Anordnung;
- Fig. 4: eine Seitenansicht (a) einer beispielhaften Ausgestaltung der vorgeschlagenen Anordnung zur Lasermaterialbearbeitung und eine Draufsicht (b) auf diese Anordnung;
- Fig. 5: eine Seitenansicht des Strahlverlaufs durch die Prismen bei einer Anordnung gemäß Figur 4;
- Fig. 6: ein Beispiel für eine Ausgestaltung der vorgeschlagenen Anordnung mit gefalteten Strahlengängen in einer Draufsicht wie bei Figur 4b;
- Fig. 7: eine Seitenansicht einer beispielhaften Ausgestaltung der zweiten optischen Anordnung der vorgeschlagenen Anordnung; und
- Fig. 8: eine beispielhafte Ausgestaltung, in der der Strahlverlauf durch die dynamische Strahlablenkeinrichtung der vorgeschlagenen Anordnung dargestellt ist.

### Wege zur Ausführung der Erfindung

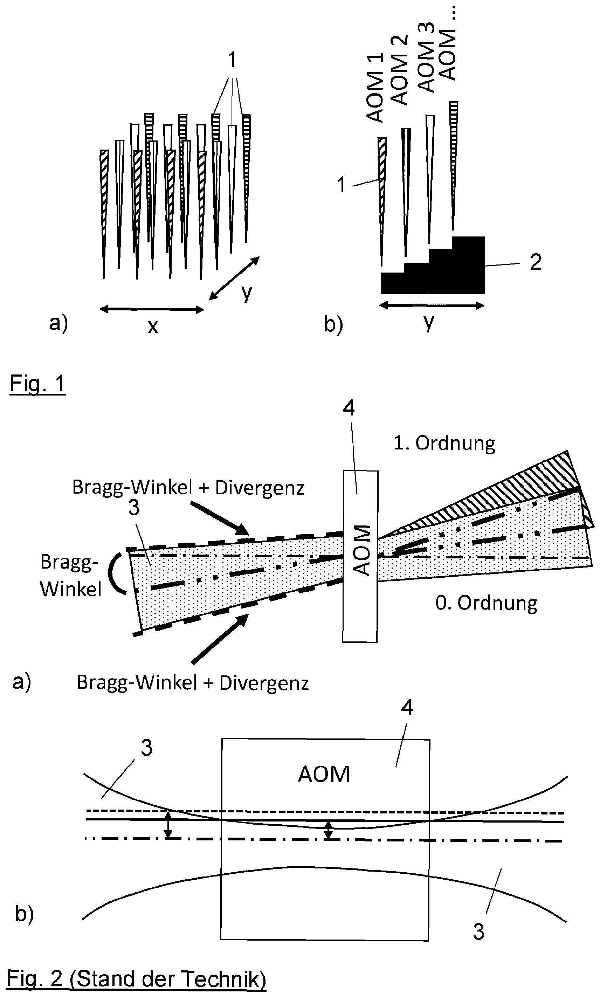

Zur effizienten Nutzung der gesamten Leistung von derzeit verfügbaren Laserstrahlquellen wird der emittierte Laserstrahl häufig in mehrere Teilstrahlen 1 aufgeteilt, durch die dann eine zweidimensionale Anordnung von Laserspots in Form einer Matrix auf dem Werkstück 2 erhalten wird. Figur 1a zeigt hierzu beispielhaft eine zweidimensionale Spot-Matrix aus den einzelnen Teilstrahlen 1 in der Bearbeitungsebene. Jede Schraffierung stellt die jeweils mit einem mehrkanaligen akusto-optischen Modulator (AOM) individuell zuschaltbaren Teilstrahlen dar. In Figur 1b ist eine beispielhafte Bearbeitung eines Werkstücks 2 angedeutet, bei der jede Zeile bzw. Linie der Matrix (je eine Schraffur) eine Ebene des Werkstücks 2 bearbeitet. Die gesamte Matrix wird innerhalb der Distanz zwischen den einzelnen Teilstrahlen in x und y abgelenkt. Um beliebige Strukturen bearbeiten zu können, muss jeder einzelne Teilstrahl 1 separat ein- und ausgeschaltet werden können. Bei den hierzu eingesetzten akusto-optischen Modulatoren hängt die Schaltgeschwindigkeit und Beugungseffizienz der Strahlablenkung allerdings stark vom Strahldurchmesser, dem Auftreffwinkel zwischen Strahl und AOM sowie der Divergenz des Strahls ab.

Figur 2a zeigt hierzu einen divergenten Eingangsstrahl 3, der unter dem Bragg-Winkel auf einen akusto-optischen Modulator 4 trifft und durch diesen Modulator zwischen der nullten und der ersten Ordnung geschaltet werden kann. Bei einem divergenten Eingangsstrahl weichen die Randstrahlen vom Bragg-Winkel ab und reduzieren dadurch den Anteil der abgelenkten Leistung. Bei Nutzung von Relais-Optiken gemäß dem Stand der Technik, mit denen die Teilstrahlen in die akusto-optischen Modulatoren geleitet werden, ist der Strahldurchmesser in der Mitte des akusto-optischen Modulators 4 kleiner als an den Rändern, wie dies anhand des Strahls 3 der Figur 2b angedeutet ist. Die Schaltgeschwindigkeit zwischen der nullten und der ersten Ordnung hängt vom Strahldurchmesser ab. Der minimale Strahldurchmesser ist durch die Zerstörschwelle des AOM-Kristalls bestimmt. Durch die divergente Strahlausbildung im akusto-optischen Modulator wird entweder die Schaltgeschwindigkeit bei Einhaltung der Zerstörschwelle erhöht oder die Zerstörschwelle bei gleichbleibender Schaltgeschwindigkeit überschritten.

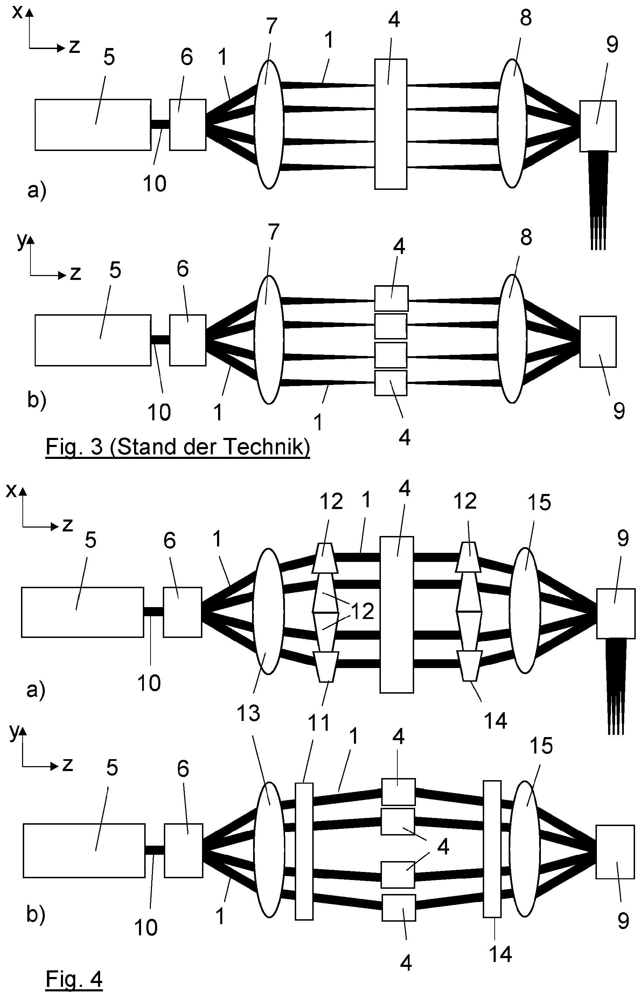

Figur 3 zeigt eine Ausgestaltung einer Laseranordnung zur Lasermaterialbearbeitung gemäß dem Stand der Technik, bei der eine Relais-Optik 7 mit entsprechenden Linsen für die Parallelisierung der Teilstrahlen 1 eingesetzt wird. Der aus der Strahlquelle 5 ausgehende Laserstrahl 10 wird durch die Strahlaufteilungseinrichtung 6 in mehrere Teilstrahlen zweidimensional (x- und y-Richtung) aufgespalten. Die Teilstrahlen 1 werden hierbei mit einer ersten Relais-Optik 7 parallelisiert und durch mehrkanalige akusto-optische Modulatoren 4 geführt. Über eine zweite Relais-Optik 8 werden diese Teilstrahlen 1 dann geeignet zusammengeführt und über einen 2D-Scanner 9 in die Bearbeitungsebene gerichtet und über die Bearbeitungsebene geführt. Figur 3a zeigt hierzu eine Seitenansicht der Anordnung mit dem in dieser ersten Dimension (x-Richtung) mehrkanaligen akusto-optischen Modulator 4. Figur 4b zeigt die Draufsicht auf diese Anordnung, in der die entsprechend mehreren akusto-optischen Modulatoren 4 zu erkennen sind.

Im Gegensatz dazu wird bei der vorgeschlagenen Anordnung keine Relais-Optik zur Parallelisierung der Teilstrahlen 1 vor den akusto-optischen Modulatoren 4 eingesetzt. Figur 4a zeigt hierzu eine Seitenansicht, Figur 4b eine Draufsicht eines Beispiels der vorgeschlagenen Anordnung. Während Bauart-bedingt bei der Ausgestaltung der Figur 3 die Linsen der Relais-Optik 7 den Durchmesser der Gesamtbreite des Aufbaus aufweisen müssen, ist dies bei der vorgeschlagenen Anordnung nicht mehr der Fall. Die Parallelisierung in einer der beiden Dimensionen (x- und y-Richtung), in die die einzelnen Teilstrahlen 1 durch die Strahlaufteilungseinrichtung 6 aufgeteilt werden, erfolgt in diesem Beispiel durch Verwendung eines Prismenstapels 11, wie er in der Seitenansicht der Anordnung in Figur 4a schematisch angedeutet ist. Jeweils ein Prisma 12 lenkt hierbei alle Strahlen einer Strahlebene, die jeweils senkrecht x-z-Ebene verläuft, um. Alle Prismen 12 sind zu einem optischen Bauteil, dem Prismenstapel 11, zusammengefügt, wie dies in Figur 4a angedeutet ist. Durch diesen Prismenstapel 11 bleibt bei der Parallelisierung die notwendige Kollimation der Teilstrahlen in den akusto-optischen Modulatoren 4 erhalten.

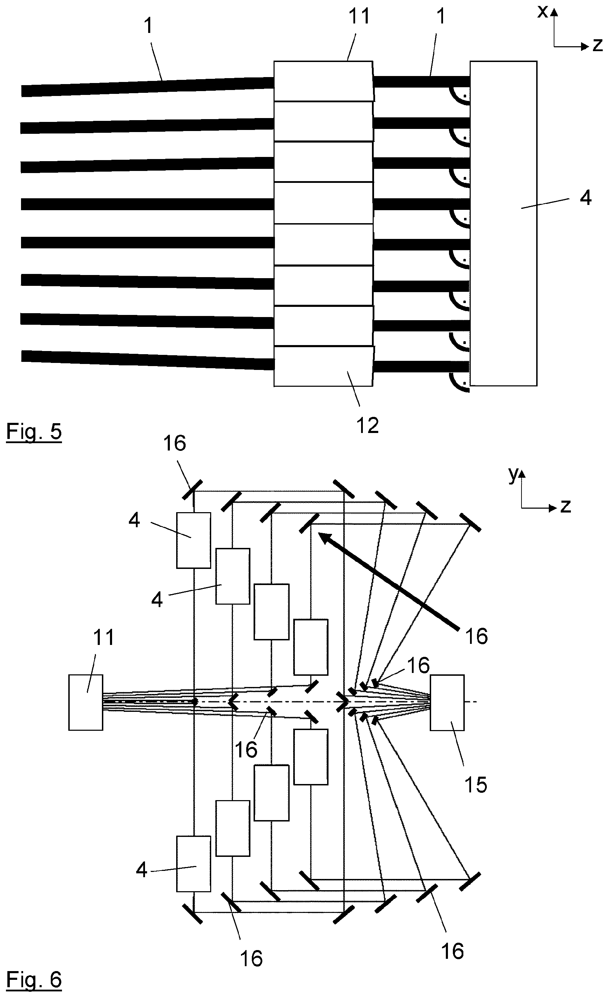

Ausgehend von der Strahlquelle 5 wird der kollimierte Rohstrahl 10 mit Hilfe des strahlteilenden Elementes der Strahlaufteilungseinrichtung 6 in eine zweidimensionale Strahlmatrix aufgeteilt. Zur Reduzierung des Strahldurchmessers wird ein afokales Teleskop 13 eingesetzt, das alle Strahlen gleichzeitig verkleinert. Die Strahlen treten kollimiert, aber in beiden Richtungen der Matrixausdehnung divergent, also nicht parallel zueinander, aus dem ersten Teleskop 13 aus. Zur vollständigen Strahlseparation wird die Strahlmatrix frei durch den Raum propagiert. Es folgt pro Strahlebene der Strahlmatrix je ein individuelles Prisma 12 des Prismenstapels 11, das die Strahlen dieser Ebene so ablenkt, dass diese senkrecht zu der Eintrittsebene der akusto-optischen Modulatoren 4 in die akusto-optischen Modulatoren eintreten. Dies ist schematisch in Figur 5 angedeutet, die eine Seitenansicht der Anordnung mit dem Prismenstapel 11 und einem mehrkanaligen akusto-optischen Modulator 4 zeigt.

Während der Prismenstapel 11 alle Teilstrahlen 1 der ersten Dimension (x-Richtung) parallelisiert, divergieren die Teilstrahlen in der zweiten Dimension (y-Richtung) weiterhin in Richtung der akusto-optischen Modulatoren 4, wie dies in Figur 4b angedeutet ist. Die einzelnen akusto-optischen Modulatoren 4 können in dieser zweiten Dimension geeignet ausgerichtet und angeordnet werden, um den optimalen Auftreffwinkel der Teilstrahlen 1 auf die Kristalle der akusto-optischen Modulatoren 4 in dieser Dimension zu erhalten.

Die akusto-optischen Modulatoren 4 können auch um 90° gedreht, senkrecht zur Propagationsachse (Strich-Punkt-Linie der Fig. 6) angeordnet werden, um die Länge der gesamten Optik der Anordnung durch Faltung des Strahlenganges zu reduzieren. Die Strahlumleitung der Teilstrahlen 1 erfolgt dann durch geeignete angeordnete Umlenkelemente, bspw. Umlenkspiegel 16, wie dies in Figur 6 in Draufsicht auf die vorgeschlagene Anordnung beispielhaft dargestellt ist.

Nach Durchgang durch die akusto-optischen Modulatoren 4 werden die Teilstrahlen 1 mit einem zweiten Teleskop 15 wiederum in ihrem Strahldurchmesser geeignet angepasst, vorzugsweise vergrößert, um durch eine nach dem 2D-Scanner 9 angeordnete Fokussieroptik einen möglichst kleinen Fokus in der Bearbeitungsebene zu erreichen. Die Fokussieroptik ist in Figur 4 nicht dargestellt. Weiterhin wird auch ein zweiter Prismenstapel 14 eingesetzt, um den Abstand der einzelnen Laserspots in der Bearbeitungsebene unabhängig vom zweiten Teleskop 15 einstellen zu können.

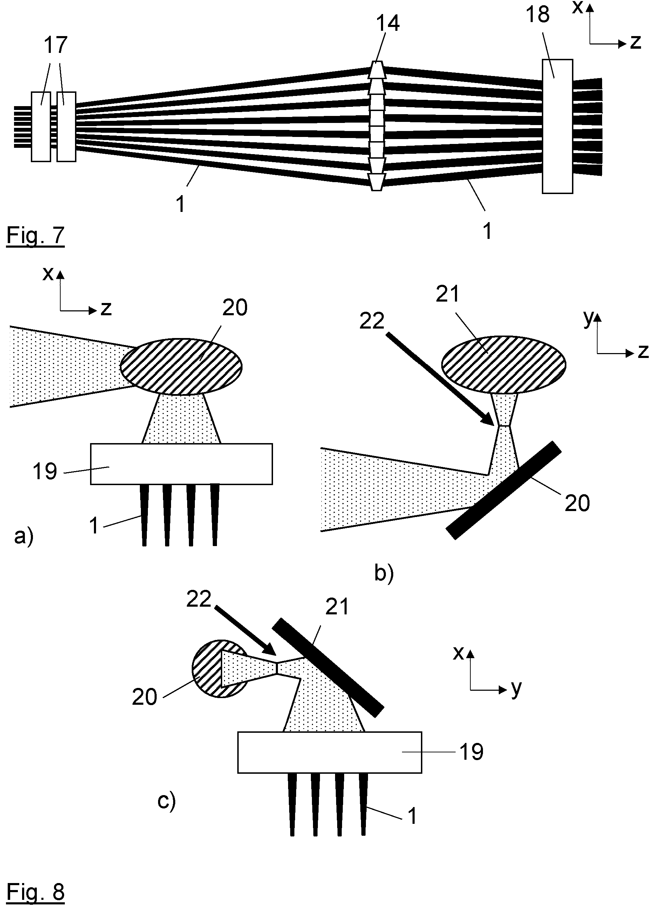

Diese Kombination aus zweitem Teleskop 15 und zweitem Prismenstapel 14 ermöglicht es, die gegensätzlichen Bedingungen Spot-Durchmesser und Spot-Abstand auf dem Werkstück bzw. in der Bearbeitungsebene mit dem Strahldurchmesser und dem Strahlabstand in den akusto-optischen Modulatoren zu vereinbaren. Der Prismenstapel 14 lässt sich dabei vorteilhaft in das zweite Teleskop 15 integrieren. Dieses Teleskop 15 weist in bekannter Weise eine Eingangsoptik 17 und eine Ausgangsoptik 18 auf, wobei zwischen Eingangs- und Ausgangsoptik der zweite Prismenstapel 14 integriert wird. Zweiter Prismenstapel 14 und zweites Teleskop 15 müssen hierzu geeignet aufeinander abgestimmt werden. Durch die Integration dieses zweiten Prismenstapels 14 wird der zusätzliche Freiheitsgrad erzeugt, den Spot-Abstand in der Bearbeitungsebene unabhängig vom Strahldurchmesser einstellen zu können. Figur 7 zeigt eine entsprechende Seitenansicht dieser Anordnung. Aus den akusto-optischen Modulatoren treten die Teilstrahlen 1 kollimiert und parallel aus. Durch Integration des Prismenstapels 14 innerhalb dieses zweiten Teleskops 15 können der Spot-Durchmesser über die Dimensionierung der Eingangs- und Ausgangsoptik 17, 18 (und deren Abstand) und der Spot-Abstand über die Dimensionierung des Prismenstapels 14 unabhängig voneinander eingestellt werden.

Hinter diesem zweiten Teleskop 15 lenkt der zweidimensionale Scanner 9 die gesamte Strahlmatrix ab, wie dies bereits in Figur 4 schematisch angedeutet ist. Figur 8 zeigt eine detailliertere Ansicht dieses 2D-Galvanometers-Scanners 9, der in bekannter Weise aus zwei um senkrecht zueinanderstehende Achsen schwenkbare Spiegel, im Folgenden als X'-Scanner 20 und Y'-Scanner 21 bezeichnet, gebildet ist. In Figur 8 ist hierbei eine Seitenansicht (Figur 8a), eine Draufsicht (Figur 8b) und eine Vorderansicht (Figur 8c) dieses Scanners schematisch dargestellt. Zwischen dem Scanner 9 und der Bearbeitungsebene fokussiert ein Objektiv (Fokussier-Optik 19) die Teilstrahlen 1 in die Bearbeitungsebene bzw. auf das Werkstück. Bei der vorliegenden Ausgestaltung ist das zweite Teleskop 15 so dimensioniert, dass der Kreuzungspunkt 22 aller Teilstrahlen 1 zwischen den beiden Ablenkspiegeln, also zwischen X'-Scanner 20 und Y'-Scanner 21 liegt. Dieser Kreuzungspunkt 22 ist in Figur 8 angedeutet. Durch diese Ausgestaltung werden durch die Strahlablenkung entstehende Bildfehler in der Bearbeitungsebene vermieden.

### Bezugszeichenliste

- 1: Teilstrahlen
- 2: Werkstück
- 3: divergenter Eingangsstrahl
- 4: akusto-optischer Modulator (AOM)
- 5: Strahlquelle
- 6: Strahlaufteilungseinrichtung
- 7: Relais-Optik vor AOM
- 8: Relais-Optik nach AOM
- 9: 2D-Scanner
- 10: kollimierter Laserstrahl
- 11: erster Prismenstapel
- 12: Prisma
- 13: erstes Teleskop
- 14: zweiter Prismenstapel
- 15: zweites Teleskop
- 16: Umlenkspiegel
- 17: Eingangsoptik
- 18: Ausgangsoptik
- 19: Fokussier-Optik
- 20: X'-Scanner
- 21: Y'-Scanner
- 22: Strahlkreuzungspunkt

## Patentansprüche

1. Anordnung zur Lasermaterialbearbeitung, umfasssend
- eine Laserstrahlquelle (5), die einen 5 kollimierten Laserstrahl (10) emittiert,
- eine Strahlaufteilungseinrichtung (6), die den kollimierten Laserstrahl (10) in mehrere Teilstrahlen (1) aufteilt,
[ - ]
**dadurch gekennzeichnet, dass**:
die Strahlaufteilungseinrichtung (6) so konfiguriert ist, dass die mehrere Teilstrahlen (1) wenigstens in einer ersten Dimension nicht parallel zueinander verlaufen, und dass die Anordnung weiter umfasst
- eine erste optische Anordnung, die die Teilstrahlen (1) in der ersten Dimension parallel zueinander ausrichtet,
- eine Modulationseinrichtung mit mehreren akusto-15 optischen Modulatoren (4), die in der ersten Dimension mehrkanalig ausgebildet sind und mit denen die einzelnen Teilstrahlen (1) unabhängig voneinander moduliert werden können,
[ - eine dynamische Strahlablenkeinrichtung (9), mit der die Teilstrahlen (1) in zwei senkrecht zueinander stehenden Richtungen dynamisch ablenkbar sind und über eine Bearbeitungsebene geführt werden können, ]
- wobei die erste optische Anordnung mehrere erste Prismen (12) aufweist, die so ausgebildet und angeordnet sind, dass die Teilstrahlen (1) beim Durchgang durch die ersten Prismen (12) durch jeweils zweifache Brechung in der ersten Dimension parallel zueinander ausgerichtet werden.

2. Anordnung nach Anspruch 1,
**dadurch gekennzeichnet,**
**dass** die ersten Prismen (12) unter Bildung eines ersten Prismenstapels (11) starr miteinander verbunden sind.

3. Anordnung nach Anspruch 1 oder 2,
**dadurch gekennzeichnet,**
**dass** die erste optische Anordnung auch ein erstes, vorzugsweise afokales Teleskop (13) aufweist, durch das ein Strahldurchmesser der Teilstrahlen (1) verringert wird.

4. Anordnung nach einem der Ansprüche 1 bis 3, **dadurch gekennzeichnet,**
**dass** die dynamische Strahlablenkeinrichtung (9) zwei um zueinander senkrechte Achsen schwenkbare Spiegel (20, 21) aufweist.

5. Anordnung nach einem der Ansprüche 1 bis 4, **dadurch gekennzeichnet,**
**dass** zwischen der Modulationseinrichtung und der dynamischen Strahlablenkeinrichtung (9) eine zweite optische Anordnung angeordnet ist, durch welche die aus der Modulationseinrichtung austretenden Teilstrahlen (1) so abgelenkt werden, dass sich ein gegenseitiger Abstand der Teilstrahlen (1) in der Bearbeitungsebene verkleinert oder vergrößert.

6. Anordnung nach Anspruch 5 in Verbindung mit Anspruch 4,
**dadurch gekennzeichnet,**
**dass** die zweite optische Anordnung so ausgebildet ist, dass sich die Teilstrahlen (1) zwischen den beiden schwenkbaren Spiegeln (20, 21) der dynamischen Strahlablenkeinrichtung (9) kreuzen.

7. Anordnung nach Anspruch 5 oder 6,
**dadurch gekennzeichnet,**
**dass** die zweite optische Anordnung ein zweites Teleskop (15) mit einer Eingangsoptik (17) und einer Ausgangsoptik (18) aufweist, wobei das zweite Teleskop (15) zwischen der Eingangs- und der Ausgangsoptik (17, 18) eine Anordnung mehrerer zweiter Prismen (12) aufweist, durch die der gegenseitige Abstand der Teilstrahlen (1) in der Bearbeitungsebene verkleinert oder vergrößert wird.

8. Anordnung nach Anspruch 7,
**dadurch gekennzeichnet,**
**dass** die zweiten Prismen (12) unter Bildung eines zweiten Prismenstapels (14) starr miteinander verbunden sind.

9. Anordnung nach einem der Ansprüche 1 bis 8,
**dadurch gekennzeichnet,**
**dass** die Strahlaufteilungseinrichtung (6) durch wenigstens ein diffraktives optisches Element gebildet ist.

10. Anordnung nach einem der Ansprüche 1 bis 9,
**dadurch gekennzeichnet,**
**dass** die akusto-optischen Modulatoren (4) so ausgerichtet sind, dass die Teilstrahlen (1) jeder Strahlebene, in der die Teilstrahlen (1) parallel zueinander ausrichtet sind, senkrecht auf die akusto-optischen Modulatoren (4) treffen.

11. Anordnung nach einem der Ansprüche 1 bis 10, **dadurch gekennzeichnet,**
**dass** Teilstrahlen (1) zwischen der Strahlaufteilungseinrichtung (6) und der dynamischen Strahlablenkeinrichtung (9) über mehrere Umlenkelemente (16) geführt werden, um durch einen gefalteten Strahlengang den Bauraum für die Anordnung zu verkleinern.

## Claims

1. Laser material machining assembly, having
- a laser beam source (5), which emits a collimated laser beam (10),
- a beam splitter (6), which splits the collimated laser beam (10) into multiple sub-beams (1),
- a dynamic beam deflection device (9), with which the sub-beams (1) are dynamically deflectable into two directions aligned perpendicularly to each other and can be guided over a machining plane,
**characterized in that**:
the beam splitter (6) is configured such that the multiple sub-beams (1) run non-parallel to each other at least in a first dimension, and that the assembly further comprises
- a first optical assembly, which aligns the sub-beams (1) in the first dimension parallel to each other,
- a modulating device with a plurality of acousto-optical modulators (4), which are of multichannel design in the first dimension and with which the individual sub-beams (1) can be modulated independently of each other,
- wherein the first optical assembly has several first prisms (12), which are designed and arranged such that the sub-beams (1) are aligned in parallel to each other in the first dimension upon passing through the first prisms (12) by means of a double diffraction in each case.

2. Assembly according to Claim 1,
**characterized in that**
the first prisms (12) are connected rigidly to each other to form a first prism stack (11).

3. Assembly according to Claim 1 or 2,
**characterized in that**
the first optical assembly also includes a first, preferably afocal telescope (13), by which a beam diameter of the sub-beams (1) is reduced.

4. Assembly according to any one of Claims 1 to 3, **characterized in that**
the dynamic beam deflection device (9) includes two mirrors (20, 21), which can be swivelled about axes that are aligned perpendicular to one another.

5. Assembly according to any one of Claims 1 to 4, **characterized in that**
a second optical assembly is arranged between the modulating device and the dynamic beam deflection device (9), which second assembly deflects the sub-beams (1) exiting the modulating device in such manner that a mutual distance between the sub-beams (1) in the machining plane is reduced or enlarged.

6. Assembly according to Claim 5 in conjunction with Claim 4,
**characterized in that**
the second optical assembly is designed such that the sub-beams (1) intersect between the two swivelling mirrors (20, 21) of the dynamic beam deflection device (9).

7. Assembly according to Claim 5 or 6,
**characterized in that**
the second optical assembly includes a second telescope (15) with an input optic (17) and an output optic (18), wherein the second telescope (15) includes an assembly of a plurality of second prisms (12) between the input and the output optics (17, 18), by which the mutual distance between the sub-beams (1) in the machining plane is reduced or enlarged.

8. Assembly according to Claim 7,
**characterized in that**
the second prisms (12) are rigidly connected to each other, forming a second prism stack (14).

9. Assembly according to any one of Claims 1 to 8, **characterized in that**
the beam splitter (6) is formed by at least one diffractive optical element.

10. Assembly according to any one of Claims 1 to 9, **characterized in that**
the acousto-optical modulators (4) are aligned such that the sub-beams (1) of each beam plane in which the sub-beams (1) are aligned parallel to each other are perpendicularly incident on the acousto-optical modulators (4).

11. Assembly according to any one of Claims 1 to 10, **characterized in that**
sub-beams (1) are guided between the beam splitter (6) and the dynamic beam deflection device (9) via multiple deflecting elements (16) to reduce the installation space for the assembly through a reticulated beam path.

## Revendications

1. Dispositif de traitement de matériaux par laser, comprenant :
- une source de faisceau laser (5), qui émet un faisceau laser collimaté (10),
- un dispositif de séparation de faisceau (6) qui divise le faisceau laser collimaté (10) en plusieurs faisceaux partiels (1),
- un dispositif de déviation de faisceau (9) dynamique, avec lequel les faisceaux partiels (1) peuvent être déviés dynamiquement dans deux directions perpendiculaires et peuvent être guidés sur un plan de traitement,
**caractérisé en ce que**
le dispositif de séparation de faisceau (6) est configuré de telle sorte que les différents faisceaux partiels (1) s'étendent au moins dans une première direction non parallèlement les uns aux autres et que le dispositif comprend en outre
- un premier dispositif optique qui aligne les faisceaux partiels (1) dans une première dimension parallèlement les uns aux autres,
- un dispositif de modulation comportant plusieurs modulateurs acousto-optiques (4), qui sont conçus comme des dispositifs multicanaux dans la première dimension et avec lesquels les faisceaux partiels individuels (1) peuvent être modulés indépendamment les uns des autres,
- dans lequel le premier agencement optique comprend plusieurs premiers prismes (12), qui sont conçus et agencés de telle sorte que les faisceaux partiels (1) soient alignés parallèlement les uns aux autres dans la première dimension par biréfringence lors de leur passage à travers les premiers prismes (12).

2. Agencement selon la revendication 1, **caractérisé en ce que** les premiers prismes (12) sont rigidement reliés les uns aux autres pour former un premier empilement de prismes (11).

3. Agencement selon la revendication 1 ou 2, **caractérisé en ce que** le premier agencement optique comprend également un premier télescope, de préférence afocal (13), par lequel le diamètre du faisceau des faisceaux partiels (1) est réduit.

4. Agencement selon une des revendications 1 à 3, **caractérisé en ce que** le dispositif de déviation de faisceau dynamique (9) présente deux miroirs (20, 21) pivotant autour d'axes mutuellement perpendiculaires.

5. Agencement selon une des revendications 1 à 4, **caractérisé en ce qu'**un deuxième dispositif optique est disposé entre le dispositif de modulation et le dispositif de déviation de faisceau (9) dynamique, permettant de dévier les faisceaux partiels (1) émergeant du dispositif de modulation de manière à réduire ou augmenter l'espacement mutuel des faisceaux partiels (1) dans le plan de traitement.

6. Agencement selon la revendication 5 combinée à la revendication 4, **caractérisé en ce que** le deuxième dispositif optique est configuré de telle sorte que les faisceaux partiels (1) se croisent entre les deux miroirs pivotants (20, 21) du dispositif de déviation de faisceau dynamique (9).

7. Agencement selon la revendication 5 ou 6, **caractérisé en ce que** le deuxième dispositif optique présente un deuxième télescope (15) comprenant une optique d'entrée (17) et une optique de sortie (18), dans lequel le deuxième télescope (15) présente un agencement de plusieurs deuxièmes prismes (12) entre les optiques d'entrée et de sortie (17, 18), permettant de réduire ou d'augmenter l'espacement mutuel des faisceaux partiels (1) dans le plan de traitement.

8. Agencement selon la revendication 7, **caractérisé en ce que** les deuxièmes prismes (12) sont reliés rigidement les uns aux autres pour former un deuxième empilement de prismes (14).

9. Agencement selon une quelconque des revendications 1 à 8, **caractérisé en ce que** le dispositif de séparation de faisceau (6) est constitué d'au moins un élément optique diffractif.

10. Agencement selon une quelconque des revendications 1 à 9, **caractérisé en ce que** les modulateurs acousto-optiques (4) sont alignés de telle sorte que les faisceaux partiels (1) de chaque plan de faisceau, dans lequel les faisceaux partiels (1) sont alignés parallèlement les uns aux autres, frappent les modulateurs acousto-optiques (4) perpendiculairement.

11. Agencement selon une quelconque des revendications 1 à 10, **caractérisé en ce que** des faisceaux partiels (1) sont guidés entre le dispositif de séparation de faisceau (6) et le dispositif de déviation de faisceau (9) dynamique via plusieurs éléments de déviation (16), afin de réduire l'espace d'installation pour l'agencement au moyen d'une trajectoire de faisceau repliée.
